# EUROPEAN PATENT APPLICATION

(11) **EP 4 268 600 A1**
(43) Date of publication of application: **01.11.2023**
(21) Application number: 23169630.3
(22) Date of filing: 24.04.2023
(51) Int. Cl.: A23D 7/005

(54) **AN EMULSION COMPOSITION**

(30) Priority: 27.04.2022 JP 2022073255
(71) Applicant: SHIN-ETSU CHEMICAL CO., LTD., Tokyo 100-0005 (JP)
(72) Inventor: SUDO, Takane, Joetsu-shi, Niigata 942-8601 (JP); NIINOBE, Shingo, Joetsu-shi, Niigata 942-8601 (JP)
(74) Representative: Schulz Junghans Patentanwälte PartGmbB

(57) **Abstract**

The objective of the present invention is to provide an emulsion composition that can be used as a seasoning agent for frozen foods even when not containing an egg or an allergenic substance. The objective can be achieved by an emulsion composition comprising a methylcellulose mixture composed of two or more types of methylcelluloses whose viscosities are different from one another, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution; and the like.

## Description

### Technical Field

The present invention relates to an emulsion composition.

### Background Art

Mayonnaise is a semi-solid oil-in-water emulsion dressing that contains an egg and seasoning agents such as oil, water, vinegar and salt. In mayonnaise, an egg yolk plays an important role in exerting flavor and emulsifying power.

On the other hand, those with egg allergies, vegans and others are unable or unwilling to eat egg-containing mayonnaise. Therefore, egg-free mayonnaise-like dressings have been developed and reported for these individuals.

For example, egg-free mayonnaise-like dressings reportedly include an emulsified dressing containing a water-soluble cellulose ether with a low viscosity (e.g., Patent Document 1) and a low-fat mayonnaise composition containing a combination of hydroxypropyl methylcellulose and excipients (e.g., Patent Document 2).

Furthermore, the need for frozen foods that can be easily prepared by heating in a microwave oven is much further increasing due to the recent increase in dual-earner households, the diversification of lifestyles and the increase in the number of meals eaten at home caused by self-curfew.

### Citation List

### Patent Documents

Patent Document 1: JP 2007-209288 A
Patent Document 2: JP 2014-533101 A

### Summary of the Invention

### Problems to be Solved by the Invention

The seasoning agents employed in frozen foods are required to have not only cold storage stability but also freezing-thawing stability so that they can be frozen and thawed. However, the present inventors have found that the emulsified dressing described in Patent Document 1 has insufficient heat resistance when used in frozen foods.

In addition to hydroxypropyl methylcellulose, the low-fat mayonnaise composition described in Patent Document 2 contains excipients such as isolated soybean protein and non-fat dry milk powder to have shape retention and stability. In recent years, there has been a growing demand for allergen-free foods that do not contain allergenic substances that cause food allergies. However, some excipients contained in the low-fat mayonnaise composition described in Patent Document 2 correspond to an allergenic substance. Therefore, there is a need for mayonnaise which contains no allergenic substances but is able to achieve excellent shape retention and stability.

In view of the above circumstances, it is an objective of the present invention to provide an emulsion composition that can be used as a seasoning agent for frozen foods even when not containing an egg or an allergenic substance.

### Means of Solving the Problems

In extensive efforts to find a way to solve the above-identified problems, the present inventors have succeeded in producing an emulsion composition in a stable emulsified state by containing a methylcellulose mixture composed of two or more types of methylcelluloses whose viscosities are different from one another and further by rendering the methylcellulose mixture to have specific properties.

Furthermore, the present inventors subjected the emulsion composition to freezing followed by natural thawing and microwave thawing. As a result, surprisingly, no separation or rupture of oil was observed in either case. Finally, the present inventors have succeeded in inventing, as a solution to the problems of the present invention, an emulsion composition that contains a methylcellulose mixture composed of two or more types of methylcelluloses whose viscosities are different from one another and in which the methylcellulose mixture has specific properties. As such, the present invention has been completed on the basis of the findings and successful examples that were first found or obtained by the present inventors.

According to the present invention, there are at least provided emulsion compositions in the following aspects:
[1] an emulsion composition comprising a methylcellulose mixture composed of two or more types of methylcelluloses whose viscosities are different from one another, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution.
[2] the emulsion composition according to [1], wherein the methylcelluloses in the methylcellulose mixture are composed of a first methylcellulose having a viscosity of 4 mPa· s to 500 mPa·s when measured with a viscometer at 20°C using a 2% by mass aqueous solution and a second methylcellulose having a viscosity of 4,000 mPa·s to 110,000 mPa·s when measured with a viscometer at 20°C using a 2% by mass aqueous solution.
[3] the emulsion composition according to [2], wherein a mass ratio of the first methylcellulose relative to the second methylcellulose in the methylcellulose mixture (first methylcellulose:second methylcellulose) is in the range between 1.5:8.5 and 8.5:1.5.
[4] the emulsion composition of any one of [1] to [3], wherein the content of the methylcellulose mixture is in the range between 0.1% by mass and 5% by mass relative to the total amount of the emulsion composition.
[5] the emulsion composition according to any one of [1] to [4], further comprising a seasoning agent.
[6] the emulsion composition according to any one of [1] to [5], not comprising egg.
[7] the emulsion composition according to any one of [1] to [6], not comprising an emulsifying agent.

### Effects of the Invention

According to the present invention, it can be achieved to provide an emulsion composition with excellent freezing resistance and heat resistance so that it can be used as a seasoning agent for frozen foods even when not containing an egg or an allergenic substance. Furthermore, the emulsion composition according to one embodiment of the present invention has excellent shape retention and emulsion stability regardless of freezing or thawing, even if the emulsion composition contains no egg or no allergenic substance.

### Brief description of drawing

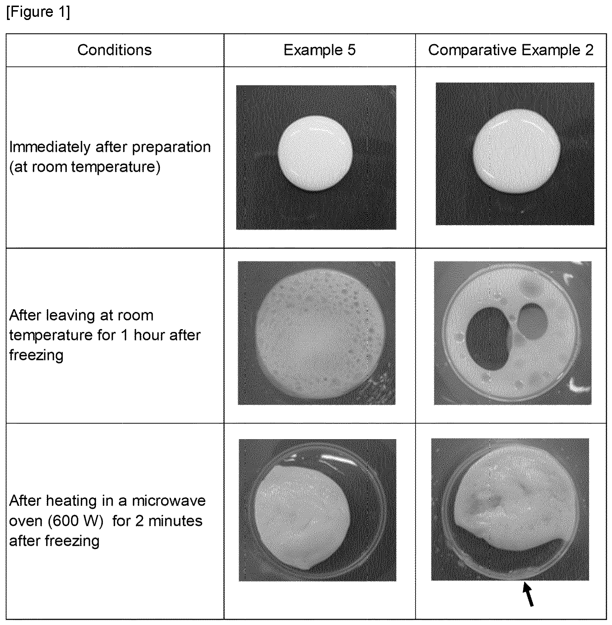

[Figure 1] Figure 1 is photographic images of the emulsion compositions according to Example 5 and Comparative Example 2, as demonstrated in Examples below.

### Description of Embodiments

While each embodiment of the present invention will now be described in detail, the present invention may take various forms to the extent that its objective can be achieved.

Unless otherwise specified, each term used herein is used in the meaning commonly used by those skilled in the art, in particular in the food and other fields, and should not be construed to have any meaning that is unduly limiting. Also, any speculations and theories herein are made on the basis of the knowledge and experiences of the present inventors and as such, the present invention is not bound by any such speculations and theories.

While the term "composition" is not particularly limited and means composition as well known, it is, for example, composed of combination of two or more components.

The term "and/or" as used herein means either any one of, any combination of two or more of, or combination of all of listed related items.

The term "content" is synonymous with concentration and amount used (amount added), and means the ratio of the amount of a component relative to the total amount of the composition. However, the total amount of the components may not exceed 100%.

The wording "to" for indicating a range of values is intended to include values preceding and following the wording; for example, "0% to 100%" means a range from 0% or more and 100% or less. The terms "more than" and "less than" used herein means the lower and upper limits without including a value following the term, respectively. For example, "more than 1" means a value beyond 1, and "less than 100" means a value below 100.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The term "emulsified dressing" means a seasoning agent in the semi-solid oil-in-water droplet form (semi-solid dressing) or an emulsified liquid seasoning agent (emulsified liquid dressing), as defined in the "Food Labeling Standards" (Japanese Cabinet Office Ordinance No. 10, 2015) under the Food Labeling Act, respectively. The same is applied to mayonnaise.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

When used herein, methylcellulose (hereinafter also referred to as "MC") having a viscosity of 4 mPa·s to 500 mPa·s when measured with a viscometer at 20°C using a 2% by mass aqueous solution is also referred to as a "first MC" while MC having a viscosity of 4,000 mPa· s to 110,000 mPa·s when measured with a viscometer at 20°C using a 2% by mass aqueous solution is also referred to as a "second MC".

The emulsion composition according to one embodiment of the present invention is characterized in that the emulsion composition contains an MC mixture composed of two or more types of MCs whose viscosities are different from one another and further in that the MC mixture has specific properties.

MC is typically used as a thickening agent. It is presumed that a gel of MC with a relatively high viscosity is more elastic when heated, which has an ability of suppressing movement of oil thereby suppressing separation of oil. Therefore, containing MC with a relatively high viscosity enables an emulsion composition to have excellent heat resistance. However, the present inventors have found that when such an emulsion composition contains no emulsifying agent, the emulsified state of the composition becomes unstable and finally the oil droplets are easy to coalesce and to separate from the water phase because the composition has lower gel elasticity when not heated.

The present inventors tried to seek ingredients that would complement the advantage of MC with a relatively high viscosity, and come to turn their attention to MC with a relatively low viscosity. In other words, the present inventors had an idea that MC with a relatively low viscosity showed surfactant action which leaded to accelerate emulsification so that oil droplets could have the smaller diameter during emulsification, resulting in suppressing oil coalescence and separation. However, when containing MC with a relatively low viscosity only, the gel obtained after heating such an emulsion composition tended to have weak heat resistance, and eventually oil droplets was easy to coalesce and to separate from the water phase.

The heat resistance of the emulsion composition is considered to be affected by the balance between the emulsion stability and the degree of elasticity (loss tangent) of the gel obtained after heated. Containing only either MC with a relatively high viscosity or MC with a relatively low viscosity worsened the above balance. However, containing both the two MCs brought the better balance so that the resulting emulsion composition could show excellent heat resistance. Therefore, the emulsion composition according to one embodiment of the present invention, which contains a MC mixture composed of two or more types of MCs with different viscosities and further in which the MC mixture has specific properties, can stably remain in an emulsified state while having heat resistance and further having freezing resistance.

### <Methylcellulose (MC)>

MC is a water-soluble cellulose ether formed by introducing methoxy groups into cellulose. While the two or more types of MCs constituting the MC mixture are not particularly limited as long as they have different viscosities from each other, the MC mixture preferably contains the first MC and the second MC.

The first MC may have a viscosity of 4 mPa·s to 500 mPa·s when measured with a viscometer at 20°C using a 2% by mass aqueous solution. For example, the first MC may have, from the viewpoint of emulsion stability and viscosity imparted to the MC mixture, preferably a viscosity of 4 mPa·s to 450 mPa·s, and more preferably a viscosity of 10 mPa· s to 200 mPa·s when measured with a viscometer at 20°C using a 2% by mass aqueous solution.

The second MC may have a viscosity of 4,000 mPa·s to 110,000 mPa·s when measured with a viscometer at 20°C using a 2% by mass aqueous solution. For example, the second MC may have, from the viewpoint of emulsion stability and viscosity imparted to the MC mixture, preferably a viscosity of 4,000 mPa·s to 90,000 mPa·s, more preferably a viscosity of 4,000 mPa·s to 85,000 mPa·s, and still more preferably a viscosity of 4,500 mPa·s to 80,000 mPa·s when measured with a viscometer at 20°C using a 2% by mass aqueous solution.

The MC mixture composed of two or more types of MCs with different viscosities, preferably composed of the first MC and the second MC, has a viscosity in a predetermined range and a loss tangent in a predetermined range.

The MC mixture may have a viscosity of 300 mPa·s to 10,000 mPa·s when measured with a viscometer at 20°C using a 2% by mass aqueous solution. For example, the MC mixture may have preferably a viscosity of 400 mPa·s to 6,000 mPa·s, more preferably a viscosity of 500 mPa·s to 4,500 mPa·s, and still more preferably a viscosity of 1,000 mPa· s to 4,500 mPa·s, when measured with a viscometer at 20°C using a 2% by mass aqueous solution. If the viscosity at 20°C using the 2% by mass aqueous solution of MC mixture is less than 300 mPa·s, the MC mixture cannot impart a sufficient viscosity to the emulsion composition. As a result, the emulsion composition cannot have sufficient stability. On the other hand, if the viscosity at 20°C using the 2% by mass aqueous solution of MC mixture is more than 10,000 mPa·s, the emulsion composition becomes too hard when heated and feels pasty when eaten to have undesirable texture and mouth feeling, resulting in being unsuitable for food, before the heat resistance and freezing resistance are considered.

The viscosity at 20°C of the 2% by mass aqueous solution of MC or MC mixture is measured using an Ubbelohde-type viscometer in the case where the viscosity is less than 300 mPa·s, or using a single cylinder type rotational viscometer in the case where the viscosity is equal to or more than 300 mPa·s, as described in Examples below.

The MC mixture may have a loss tangent equal to or less than 2.5 when measured with a rheometer at 60°C under the condition of being a frequency of 1 Hz and a strain of 1% using a 2% by mass aqueous solution. For example, from the viewpoint of heat resistance, the loss tangent of the MC mixture may be preferably in the range between 0.01 and 2.40, and more preferably in the range between 0.1 and 2.40. If the above loss tangent is more than 2.5, the smaller elastic contribution of the MC mixture to the emulsion composition gives rise to loss of shape retention thereby easily causing oil droplets coalescence leading to demulsification. As a result, the emulsion composition is prone to have impaired heat resistance.

The loss tangent at 60°C of the 2% by mass aqueous solution of MC mixture is measured under the condition of being a frequency of 1 Hz and a strain of 1% using a rheometer such as MCR301 manufactured by Anton Paar, as described in Examples below.

While the MCs that forms the MC mixture are not particularly limited in terms of other properties, it is preferable that such other properties do not interfere with the solution to the problems of the present invention. For example, the amount of methoxy groups in MC is preferably in the range between 20% by mass and 40% by mass, more preferably in the range between 25% by mass and 35% by mass, still more preferably in the range between 26% by mass and 33% by mass, and even still more preferably in the range between 28% by mass and 31% by mass, from the viewpoint of emulsifiability and heat resistance of the emulsion composition.

The degree of substitution (DS) of methoxy groups in MC is preferably in the range between 1.00 and 2.10, more preferably in the range between 1.40 and 2.05, still more preferably in the range between 1.60 and 2.00, and even still more preferably in the range between 1.70 and 1.90, from the viewpoint of emulsifiability and heat resistance of the emulsion composition. DS of methoxy groups in MC refers to the average number of methoxy groups per unit of anhydrous glucose.

The amount and DS of methoxy groups in MC are the value measured by the measurement method for the section "methylcellulose" described in The Japanese Pharmacopoeia, 18th Edition, as described in Examples below, or the value determined by converting the value.

If the MC mixture is composed of the first MC and the second MC, the mass ratio of the first MC and the second MC (first methylcellulose:second methylcellulose) in the MC mixture is not particularly limited. Examples of the mass ratio include preferably in the range between 1.5:8.5 and 8.5:1.5, and more preferably in the range between 2.0:8.0 and 8.0:2.0, between 2.5:7.5 and 7.5:2.5, or between 0.3:1.7 and 0.5:1.5, from the viewpoint of emulsion stability and thickening ability. As such, it is preferable that the first MC and the second MC be balanced in quantity in the MC mixture so that the resulting emulsion composition can have better heat resistance.

While the content of the MC mixture in the emulsion composition is not particularly limited, as long as the content can solve the problems of the present invention. Examples of the content include, relative to the total amount of the emulsion composition, preferably 0.1% by mass to 5% by mass, more preferably 0.2% by mass to 4% by mass, and still more preferably 0.3% by mass to 2.5% by mass, from the viewpoint of viscosity and emulsion stability imparted to the emulsion composition.

While the method of obtaining MC is not particularly limited, MC may be produced by known production methods or obtained as commercially available products.

One example of the method of producing MC can include the steps of reacting cellulose pulp with alkali to obtain an alkali cellulose, reacting the obtained alkali cellulose with a methylating agent to obtain a reactant, and then washing, drying, and pulverizing the obtained reactant to prepare methylcellulose.

### <Other components than MC>

In addition to MC, the emulsion composition according to one embodiment of the present invention contains oil and water.

Oil may be any oils contained in normal emulsified dressings. Examples of oil include plant-derived oils, specifically coconut oil, palm oil, soybean oil, rapeseed oil, rice oil, cottonseed oil, corn oil, sunflower oil, olive oil, safflower oil, kapok oil, salad oil and palm kernel oil. Among them, olive oil, palm oil, soybean oil, rapeseed oil, rice oil, corn oil, sunflower oil and salad oil are preferred since they are commonly used in preparing mayonnaise and mayonnaise-like dressings.

As long as the content of oil is an amount normally used in emulsified dressings, the content is not particularly limited. Examples of the content include preferably 20% by mass to 70% by mass, more preferably 25% by mass to 60% by mass, and still more preferably 25% by mass to 50% by mass, from the viewpoint of forming the emulsion composition with suitable properties.

Water is not particularly limited as long as it is used in the preparation of normal emulsified dressings. Examples of water include ion-exchanged water, distilled water and tap water. As long as water can dissolve MC which is a water-soluble cellulose ether, it may be an aqueous solution containing salts, water-soluble polymers or other components.

As long as the content of water is an amount normally used in emulsified dressings, the content is not particularly limited. Examples of the content include preferably 5% by mass to 80% by mass, more preferably 10% by mass to 70% by mass, and still more preferably 12% by mass to 60% by mass, from the viewpoint of no separation from oil.

The emulsion composition according to one embodiment of the present invention may contain seasoning agents which allow the emulsion composition to be richly flavored. Examples of the seasoning agent include salt, vinegar, sugar, sweeteners such as stevia formulations, soy sauce, miso, amino acids such as monosodium glutamate, yeast extract, and ribonucleotides. While the content of the seasoning agent is not particularly limited, the content may be preferably in the range between 0% by mass and 25% by mass, more preferably in the range between 5% by mass and 20% by mass, and still more preferably in the range between 8% by mass and 15% by mass.

The emulsion composition according to one embodiment of the present invention may contain other additives so that the emulsion composition can have desired properties. Examples of the additives include components normally contained in emulsified dressings, such as spices, emulsifying agents, thickening agents, coloring agents, preservatives, antioxidants, vegetable purees and fruit juices.

In addition, the emulsion composition according to one embodiment of the present invention can be eaten by those who have egg allergy and other food allergies. Thus, the emulsion composition according to one embodiment of the present invention is preferable to be substantially free of allergenic substances derived from wheat, egg, milk and soy, which are contained in conventional mayonnaise and mayonnaise-like dressings. In view of the increasing natural orientation, the emulsion composition according to one embodiment of the present invention is preferable to be substantially free of other emulsifying agent than MC. Furthermore, the emulsion composition according to one embodiment of the present invention is preferable to be substantially free of gelatin and other animal-derived substances if it is used for vegan.

The expression "substantially free of" an substance means that such a substance is not intentionally contained, except for the case where such a substance is unavoidably contained by raw materials containing such a substance together with other components or by executing manufacturing steps using such raw materials. Therefore, the expression "substantially free of" a substance means to be completely free of such a substance, or to contain such a substance in a very small amount even if such a substance is contained. The content of such a substance may be preferably in the range between 0% by mass and 0.1% by mass.

Examples of the spice include pepper, mustard, chili pepper, cardamom, cinnamon, saffron, coriander, nutmeg, parsley, basil, sage, thyme, oregano, dill, garlic powder and onion powder.

Examples of the emulsifying agent include sucrose fatty acid esters, polyglycerol fatty acid esters, sorbitan fatty acid esters and propylene glycol fatty acid esters.

Examples of the thickening agent include processed starch, unprocessed starch, guar gum, xanthan gum, tamarind seed gum, locust bean gum, gellan gum, Arabic gum, alginates, pectin, pullulan, agar, gelatin and microcrystalline cellulose.

Examples of the coloring agent include glucumin, carotene and crotin.

Examples of the preservative include sorbic acid, potassium sorbate, ethyl paraoxybenzoate and propyl paraoxybenzoate.

Examples of the antioxidant include L-ascorbic acid, sodium L-ascorbate, γ-oryzano!, catechin, dl-α-tocopherol and acetic acid tocopherol.

The vegetable puree means a semi-liquid vegetable processed food product obtained by grinding and/or mashing vegetables. Examples of the vegetable used for producing the vegetable puree include paprika, bell pepper, tomato, onion, carrot, burdock, cucumber, eggplant, cabbage, spinach, celery, mulukhiya, kale, asparagus, broccoli, cauliflower and avocado.

Examples of the fruit juice include lemon juice, lime juice, sudachi juice and yuzu juice.

The additives may be used either individually or in combination of two or more of such additives. The content of the additives is not particularly limited as long as the content does not prevent the emulsion composition from solving the problems of the present invention. Examples of the content is preferably in the range between 0% by mass and 80% by mass, more preferably in the range between 0.001% by mass and 75% by mass, still more preferably 0.01% by mass and 70% by mass, and even still more preferably in the range between 0.01% by mass and 60% by mass or between 0.01% by mass and 50% by mass.

### <Properties of emulsion composition>

As long as the emulsion composition according to one embodiment of the present invention contains the MC mixture composed of two or more types of MCs with different viscosities and further the MC mixture has a viscosity in the above predetermined range when measured with a viscometer at 20°C using a 2% by mass aqueous solution and a loss tangent in the above predetermined range when measured with a rheometer at 60°C under the condition of being a frequency of 1 Hz and a strain of 1% using a 2% by mass aqueous solution, the other properties of the composition are not particularly limited.

The emulsion composition according to one embodiment of the present invention is characterized by having both heat resistance and freezing resistance. When consisting of the MC mixture, water and oil, the emulsion composition according to one embodiment of the present invention freezes at -15°C and is in an ice-like state. When containing seasoning agents and/or additives in addition to the MC mixture, water and oil, the emulsion composition according to one embodiment of the present invention freezes at -15°C but is in a slight soft state like ice cream. On the other hand, the emulsion composition according to one embodiment of the present invention is in an emulsion state when thawing at room temperature or in a microwave oven from the frozen from. In this case, in the emulsion composition according to one embodiment of the present invention, no separation between an aqueous phase and an oil phase is not observed, but they are mixed evenly to retain a stably emulsified state.

The heat resistance and freezing resistance achieved by the emulsion composition according to one embodiment of the present invention may be to the extent that they are evaluated as "good" by the method as described in Examples below.

### <Method of producing emulsion composition>

The emulsion composition according to one embodiment of the present invention is obtained by mixing the MC mixture, water and oil, and optionally seasoning agents and additives. The order of addition of each component is not particularly limited and the emulsion composition can be produced by any steps. For example, in order to uniformly disperse MCs, it is preferable to mix the MC mixture with oil followed by adding water, seasoning agents and additives to the resultant. Water, seasoning agents and additives may be preferably cooled, or added while cooling such that better dissolution of MCs can be achieved.

Examples of the method include a method including the steps of: mixing an MC mixture composed of a first MC and a second MC with oil to obtain an MC suspension in which MCs are dispersed in oil; mixing the MC suspension with water and optionally seasoning agents and additives at room temperature or while cooling in ice; and then defoaming the resultant, if the resultant is foamed, to obtain an oil-in-water type of semi-solid or emulsified liquid emulsion composition.

Specific examples of the method of producing the emulsion composition according to one embodiment of the present invention include the methods as described in Examples below.

### <Usage of emulsion composition>

The usage of the emulsion composition according to one embodiment of the present invention is not particularly limited. For example, since the emulsion composition according to one embodiment of the present invention can contain seasoning components, the emulsion composition may be used as an emulsified dressing. Furthermore, since the emulsion composition has both properties of heat resistance and freezing resistance, the emulsion composition may be also used as an emulsified dressing for frozen foods, prepared foods, lunch boxes and cooked foods. The state of the emulsion composition according to one embodiment of the present invention is not particularly limited, and may be either a semi-solid state or a liquid state, but preferably a semi-solid state. If the emulsion composition according to one embodiment of the present invention is in a semi-solid state, the emulsion composition may be used as an egg-free mayonnaise-like dressing or salad creamy dressing.

### <Other aspects of the invention>

The emulsion composition according to one embodiment of the present invention is characterized by causing no oil separation or rupture after thawing either naturally or in a microwave oven while retaining a stably emulsified state. The above characteristics are also demonstrated even if seasoning agents and additives are contained. According to the characteristics, the following aspects are provided as other aspects of the invention:
an emulsion composition for seasoning comprising a methylcellulose mixture composed of two or more types of methylcelluloses whose viscosities are different from one another, oil, water and a seasoning agent, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution;
a frozen food comprising the emulsion composition for seasoning and a food ingredient;
a method of producing a frozen food, comprising cooking a food ingredient using the emulsion composition for seasoning to obtain a frozen food;
a composition for improving heat resistance and/or freezing resistance of an emulsion composition, comprising a methylcellulose mixture composed of two or more types of methylcelluloses whose viscosities are different from one another, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution;
a method for improving heat resistance and/or freezing resistance of an emulsion composition, comprising adding a methylcellulose mixture composed of two or more types of methylcelluloses whose viscosities are different from one another to an emulsion composition, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution; and
an emulsifying agent comprising a methylcellulose mixture composed of two or more types of methylcelluloses whose viscosities are different from one another, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution.

### Examples

While the present invention will now be described in further detail with reference to Examples and Comparative Examples, the present invention is not limited to what is described in these Examples and Comparative Examples.

### <Preparation of emulsion composition>

### [Materials used]

For MC, the samples listed in Table 1 (all manufactured by Shin-Etsu Chemical) were used. Tap water was used for water. Olive oil ("LOLIERA"; manufactured by Nisshin OilliO Group) was used for oil. The high-acid vinegar ("TOKUNOU Grain Vinegar" (acidity: 8.4%); manufactured by Mizkan) was used for vinegar. The salt "Hakata no Shio" (manufactured by Hakata Salt) was used for salt. The fine white sugar ("Mama-Jirushi fine white sugar"; manufactured by Mitsui DM Sugar) was used for sugar.

Other food ingredients used include yellow bell pepper, waxy corn processed starch ("Mapus 449"; manufactured by Nihon Shokuhin Kako), monosodium glutamate ("Vertex IG20"; manufactured by Fuji Foods), ribonucleotides ("RIBOTIDE"; manufactured by Mitsubishi Corporation Life Science), yeast extract ("Vertex IG20"; manufactured by Fuji Foods), mustard ("Karashi"; manufactured by SB Foods), and stevia formulation ("High-Stevia 500"; manufactured by Ikeda Tohka Industries).

### [Example 1]

Olive oil weighing 30.0 g was added to a bowl, and then the first MC powder and the second MC powder weighed as shown in Table 2, respectively, were added to the same bowl. The obtained mixture was stirred with a hand mixer ("DL-2392"; manufactured by KAI Group) for 1 minute, in which the speed of the hand mixer was set to scale "1", to sufficiently disperse the MC powders in oil to obtain an MC suspension.

The obtained MC suspension was stirred using the hand mixer with the speed set to scale "2" while cooling the bowl in ice. While stirring, 68.0 g of cold water was added to the bowl, and the mixture was stirred for one more minute. The speed of the hand mixer was then set to scale "5", and the mixture was stirred for one more minute. The resulting mixture was subjected to centrifugation separation treatment at 1,000 rpm for 10 minutes for the purpose of defoaming to obtain an emulsion composition.

### [Examples 2 to 8 and Comparative Examples 1 to 3]

The emulsion compositions were obtained in the same manner as in Example 1, except that the first MC powder and the second MC powder were changed to the first MC powder and the second MC powder as listed in Table 2. As for the preparation of Comparative Example 1, the third MC powder was also used.

### [Examples 9 and 10]

In a bowl, 15.0 g of processed starch was dissolved in 68.5 g of water to prepare a starch with water. The seeds and core of the yellow bell pepper (paprika) were removed, and the resultant was pureed using a food blender ("Cuisinart Food Processor DLC-8P2-J"; manufactured by Conair Japan) for 3 minutes. In a bowl, 200.0 g of the pureed paprika was mixed with 83.5 g of the starch with water, and the mixture was stirred for 3 minutes while heating at 80°C, and water was added at the amount evaporated and adjusted to achieve a yield of 100% to obtain a puree solution. The bag filled with the resulting puree solution was subjected to heat sterilization treatment at 95°C for 20 minutes and then cooled overnight in the refrigerator.

The first MC powder (MC1) and the second MC powder (MC2) as listed in Table 3 were dispersed in olive oil to prepare a MC suspension. The puree solution, salt, vinegar, sugar, monosodium glutamate, ribonucleotides, yeast extract, mustard, stevia formulation and the MC suspension were added sequentially to a food mixer, and stirred for 5 minutes after all components were added. The mixture was then subjected to vacuum defoaming to obtain the emulsion composition of Example 9 that was a mayonnaise-like dressing. The content of each component in the emulsion composition is shown in Table 3.

In the same manner as in the preparation of the emulsion composition of Example 9, the emulsion composition of Example 10 was obtained using the components listed in Table 4.

### <Evaluation item>

### [Viscosity of MC and MC mixture]

The viscosity at 20 °C of the 2% by mass aqueous solution of MC or MC mixture was, if the viscosity was less than 300 mPa s, determined by using an Ubbelohde-type viscometer according to the section "1. Method I Viscosity measurement by capillary tube viscometer" in the General Tests "2.53 Viscosity Determination" in The Japanese Pharmacopoeia, 18th Edition (https://www.mhlw.go.jp/content/11120000/000945683.pdf). On the other hand, the viscosity at 20 °C of the 2% by mass aqueous solution of MC or MC mixture was, if the viscosity was equal to or more than 300 mPa s, determined by using a single cylinder-type rotational viscometer according to the section "2. Method II Viscosity measurement by rotational viscometer" in the General Tests "2.53 Viscosity Determination" in The Japanese Pharmacopoeia, 18th Edition.

The 2% by mass aqueous solution of MC or MC mixture was prepared in the following manner.

An amount of MC corresponding to 6.0 g of the dried product was accurately weighed in a jar (diameter: 65 mm, height: 120 mm, volume: 350 ml). To the jar, hot water at 98°C was added to amount to 300.0 g. The jar was capped and the mixture was stirred at 350 rpm to 450 rpm for 20 minutes using an agitator until the mixture contained in the jar reached a state of uniform dispersion. Subsequently, the dispersion was stirred for 40 minutes in a water bath at 5°C or less to dissolve MC in the dispersion to obtain a 2% by mass aqueous solution of MC.

### [Amount (MeO) and degree of substitution (DS) of methoxy groups in MC]

MeO of methoxy groups in MC was determined according to the quantitative method "Assay" described in the section "Methylcellulose" in The Japanese Pharmacopoeia, 18th Edition (https://www.mhlw.go.jp/content/11120000/000904449.pdf). DS of methoxy groups in MC was determined by converting the amount (MeO) of methoxy groups obtained.

### [Loss tangent]

The loss tangent of MC mixture was measured for the prepared 2% by mass aqueous solution using a rheometer ("MCR 301" manufactured by Anton Paar) in the following procedures.

The sample measurement section of the rheometer was pre-tempered to 5°C. The 2% by mass aqueous solution of MC mixture was poured into a CC27 measuring cup (a coaxial double cylindrical aluminum container with a diameter of 30 mm and a height of 80 mm) up to the marked line (25 ml). The measurement was started for the 2% by mass aqueous solution of MC mixture poured into the measuring cup using a bob cylinder (26.7 mm in diameter and 40.0 mm in height: CC27) at a frequency of 1 Hz and a strain of 1%. The measurement section was heated stepwise every 2°C per minute from 5°C, and data was collected at one point per minute. The loss tangent (60°C) of the MC mixture was defined as the ratio of the storage modulus to the loss modulus when the sample measurement portion reached 60°C.

### [Freezing resistance]

To a cylindrical storage container with a diameter of 3 cm, 4.0 g of the emulsion composition was transferred and frozen at -15°C for 2 days. The container after freezing storage was left at room temperature for 1 hour. The emulsion composition in the container after left was visually observed. If a coarse oil droplet (oil separation) was observed, the emulsion composition was rated "x" as having poor freezing resistance. If no oil separation was observed, the emulsion composition was rated "+" as having good freezing resistance.

### [Heat resistance]

To a cylindrical storage container with a diameter of 3 cm, 4.0 g of the emulsion composition was transferred and frozen at -15°C for 2 days. The container after freezing storage was heated in a household microwave oven at 600 W for 2 minutes. The emulsion composition in the container after heated was visually observed. If clearly released oil (oil separation) was observed, the emulsion composition was rated "x" as having poor heat resistance. If no oil separation was observed, the emulsion composition was rated "+" as having good heat resistance.

### <Evaluation results>

Table 1 shows the evaluation results of the viscosity at 20°C of the 2% by mass aqueous solution, MeO and DS of methoxy groups for the first and second MCs used. Tables 2 to 4 shows the measurement results of the viscosity at 20°C of the 2% by mass aqueous solution and the loss tangent at 60°C of the 2% by mass aqueous solution under the condition of being a frequency of 1 Hz and a strain of 1% for the MC mixture, and the evaluation results of freezing resistance and heat resistance for the emulsion composition. Figure 1 shows photographs of the appearance of the emulsion compositions of Example 5 and Comparative Example 2, taken immediately after preparation, taken after leaving at room temperature for 1 hour after freezing in the course of the freezing resistance evaluation, and taken after heating in a microwave oven (600 W) for 2 minutes after freezing in the course of the heat resistance evaluation.

As shown in Table 2, the emulsion compositions of Examples 1 to 8 had excellent freezing and heat resistance, with no observation of oil floating during thawing either naturally or in microwave oven. Similarly, as shown in Tables 3 and 4, the emulsion compositions of Examples 9 and 10, which contained either seasoning agents only or additives such as vegetable puree, a thickening agent and a spice in addition to seasoning agents, also had excellent freezing and heat resistance.

On the other hand, in the case of using the emulsion composition of Comparative Example 1, in which the MC mixture having no predetermined loss tangent was employed, a small contribution of elasticity resulted in coalescence of oil droplets at room or at a higher temperature and easy emulsion disruption to cause oil separation.

The emulsion composition of Comparative Example 2, in which the MC mixture having no predetermined viscosity was employed, could have no sufficient viscosity or elasticity at room temperature or at a higher temperature, resulting in progressing emulsion disruption to cause oil separation. Specifically, when compared to Example 5 as a representative example, as shown in Figure 1, there was no difference in appearance immediately after preparation between the emulsion compositions of Example 5 and Comparative Example 2, and they both had a white-tinged mayonnaise-like appearance. Furthermore, both of them had a yellowish mayonnaise-like appearance when frozen.

However, as shown in Figure 1, in the case of using the emulsion composition of Comparative Example 2, coalescent oil droplets were observed when leaving at room temperature for 1 hour after freezing, and oil present away from the emulsion composition (released oil) was observed (as the area indicated by the arrow in Figure 1) when heating in a microwave oven after freezing, resulting in oil separation. In contrast, no such oil separation was observed in the case of using the emulsion composition of Example 5.

In the similar manner as the emulsion composition of Comparative Example 1, heating of the emulsion composition of Comparative Example 3, in which the MC mixture had a sufficient viscosity but had a higher loss tangent and became viscous, was easy to cause emulsion disruption, resulting in oil separation.

The emulsion composition of Example 9 was superior in flavor to the commercial mayonnaise "VEGAN MAYO" (manufactured by Hellmann's). In addition, when compared to the commercially available dipping sauce "Dipping Sauce Red Bell Pepper" (manufactured by Ryohin Keikaku), the emulsion composition of Example 9 had a comparable flavor but was differently seasoned. The emulsion composition of Example 10 also had an excellent flavor.

These results indicate that an emulsion composition containing a MC mixture composed of two or more types of MCs with different viscosities, in which the MC mixture has the predetermined viscosity and loss tangent, is excellent in terms of emulsifiability as well as freezing resistance and heat resistance.

**[Table 1]**

| | Viscosity (mPa · s) | DS (-) | MeO (% by mass) |
|---|---|---|---|
| MC-1 | 4.13 | 1.77 | 29.4 |
| MC-2 | 15.4 | 1.75 | 29.1 |
| MC-3 | 121 | 1.79 | 29.6 |
| MC-4 | 447 | 1.79 | 29.6 |
| MC-5 | 4850 | 1.79 | 29.7 |
| MC-6 | 8120 | 1.81 | 30.0 |
| MC-7 | 10700 | 1.81 | 30.0 |
| MC-8 | 76300 | 1.84 | 30.4 |

**[Table 2]**

| Emulsion composition | First MC (% by mass) | Second MC (% by mass) | Third MC (% by mass) | Oil (% by mass) | Water (% by mass) | Loss tangent | Viscosity (mPa·s) | Freezing resistance | Heat resistance |
|---|---|---|---|---|---|---|---|---|---|
| Example 1 | MC-2 [1.00] | MC-5 [1.00] | | Olive oil [30.00] | Tap water [68.00] | 1.98 | 372 | + | + |
| Example 2 | MC-1 [1.30] | MC-8 [0.70] | | Olive oil [30.00] | Tap water [68.00] | 0.02 | 1254 | + | + |
| Example 3 | MC-2 [1.30] | MC-8 [0.70] | | Olive oil [30.00] | Tap water [68.00] | 0.03 | 1477 | + | + |
| Example 4 | MC-4 [1.50] | MC-7 [0.50] | | Olive oil [30.00] | Tap water [68.00] | 0.90 | 1290 | + | + |
| Example 5 | MC-3 [0.50] | MC-6 [1.50] | | Olive oil [30.00] | Tap water [68.00] | 063 | 4140 | + | + |
| Example 6 | MC-3 [0.40] | MC-6 [1.60] | | Olive oil [30.00] | Tap water [68.00] | 1.68 | 4270 | + | + |
| Example 7 | MC-2 [0.30] | MC-6 [1.70] | | Olive oil [30.00] | Tap water [68.00] | 2.36 | 4210 | + | + |
| Example 8 | MC-3 [1.00] | MC-5 [1.00] | | Olive oil [30.00] | Tap water [68.00] | 219 | 758 | + | + |
| Comparative Example 1 | MC-3 [1.00] | MC-4 [0.80] | MCE-7 [0.20] | Olive oil [30.00] | Tap water [68.00] | 2.84 | 346 | x | x |
| Comparative Example 2 | MC-3 [1.70] | MC-7 [0.30] | | Olive oil [30.00] | Tap water [68.00] | 0.66 | 266 | x | x |
| Comparative Example 3 | MC-2 [1.00] | MC-5 [1.00] | | Olive oil [30.00] | Tap water [68.00] | 534 | 409 | + | x |

**[Table 3]**

| Eample 9: Emulsion composition | | | |
|---|---|---|---|
| MC1 | MC-2 | (% by mass) | 1.0 |
| MC2 | MC-5 | (% by mass) | 1.0 |
| Oil | Olive oil | (% by mass) | 30.0 |
| Water | Tap water | (% by mass) | 13.7 |
| Vegetable puree | Paprika | (% by mass) | 40.0 |
| Thickening agent | Processed starch | (% by mass) | 3.0 |
| Seasoning agents | Salt | (% by mass) | 5.0 |
| | High-acid vinegar | (% by mass) | 4.0 |
| | Sugar | (% by mass) | 1.0 |
| | Monosodium glutamate | (% by mass) | 0.6 |
| | Ribonucleotides | (% by mass) | 0.3 |
| | Yeast extract | (% by mass) | 0.2 |
| | Stevia formulation | (% by mass) | 0.1 |
| Spice | Mustard | (% by mass) | 0.1 |
| Total | | (% by mass) | 100.0 |
| Loss tangent | | | 1.98 |
| Viscosity | | (mPa·s) | 372 |
| Freezing resistance | | | + |
| Heat resistance | | | + |

**[Table 4]**

| Eample 10: Emulsion composition | | | |
|---|---|---|---|
| MC1 | MC-1 | (% by mass) | 0.15 |
| MC2 | MC-8 | (% by mass) | 0.85 |
| Oil | Olive oil | (% by mass) | 30.0 |
| Water | Tap water | (% by mass) | 57.0 |
| Seasoning agents | Salt | (% by mass) | 5.0 |
| | High-acid vinegar | (% by mass) | 6.0 |
| | Sugar | (% by mass) | 1.0 |
| Total | | (% by mass) | 100.0 |
| Loss tangent | | | 0.05 |
| Viscosity | | (mPa·s) | 18,240 |
| Freezing resistance | | | + |
| Heat resistance | | | + |

### Industrial applicability

The emulsion composition according to one embodiment of the present invention can be used in the food industry or other industries, and has both heat resistance and freezing resistance while retaining a stable emulsified state so that the emulsion composition can be employed as an emulsified dressing for foods such as frozen foods, prepared foods, lunch boxes and cooked foods. In addition, since the emulsion composition according to one embodiment of the present invention can be produced by a concise process without complicated steps, the emulsion composition can be produced on an industrial scale and can be used not only in the food field but also in widely various applications.

### Cross-reference of related applications

The present application claims the benefit of priority to Japanese Patent Application No. 2022-073255, filed on April 27, 2022, the disclosure of which is incorporated herein by reference in its entirety.

The disclosure of all the documents described herein including Patent Documents 1 and 2 is incorporated herein by reference in its entirety.

## Claims

1. An emulsion composition comprising a methylcellulose mixture composed of two or more types of methylcelluloses whose viscosities are different from one another, wherein the methylcellulose mixture has a viscosity of 300 mPa·s to 10,000 mPa·s when measured with a viscometer at 20°C using a 2% by mass aqueous solution, and the methylcellulose mixture has a loss tangent equal to or less than 2.5 when measured with a rheometer at 60°C under the condition of being a frequency of 1 Hz and a strain of 1% using a 2% by mass aqueous solution.

2. The emulsion composition according to claim 1, wherein the methylcelluloses in the methylcellulose mixture are composed of a first methylcellulose having a viscosity of 4 mPa· s to 500 mPa·s when measured with a viscometer at 20°C using a 2% by mass aqueous solution and a second methylcellulose having a viscosity of 4,000 mPa·s to 110,000 mPa·s when measured with a viscometer at 20°C using a 2% by mass aqueous solution.

3. The emulsion composition according to claim 2, wherein a mass ratio of the first methylcellulose relative to the second methylcellulose in the methylcellulose mixture (first methylcellulose:second methylcellulose) is in the range between 1.5:8.5 and 8.5:1.5.

4. The emulsion composition according to any one of claims 1 to 3, wherein the content of the methylcellulose mixture is in the range between 0.1% by mass and 5% by mass relative to the total amount of the emulsion composition.

5. The emulsion composition according to any one of claims 1 to 3, further comprising a seasoning agent.

6. The emulsion composition according to any one of claims 1 to 3, not comprising egg.

7. The emulsion composition according to any one of claims 1 to 3, not comprising an emulsifying agent.
